# EUROPEAN PATENT APPLICATION

(11) **EP 1 236 614 A2**
(43) Date of publication of application: **04.09.2002**
(21) Application number: 02003908.7
(22) Date of filing: 21.02.2002
(51) Int. Cl.: B60Q 1/12

(54) **Headlamp for vehicle**

(30) Priority: 28.02.2001 JP 2001055303
(71) Applicant: ICHIKOH INDUSTRIES, LTD., Tokyo 144-0022 (JP)
(72) Inventor: Furuya, Takayuki, Isehara-shi, Kanagawa-ken, 259-1192 (JP)
(74) Representative: Grünecker, Kinkeldey, Stockmair & Schwanhäusser Anwaltssozietät

(57) **Abstract**

In the headlamp (1) for a vehicle, a stepping motor (11) as a driving unit moves in a direction in which the stepping motor disengages from the movable reflector (6) through operation of a solenoid (14) as a moving unit in the event of failure of the stepping motor (11). Thereby, the movable reflector becomes in a free rotation state, and automatically returns to the neutral position by a spring (7) as a biasing unit.

## Description

### FIELD OF THE INVENTION

The present invention relates to a headlamp for vehicles. More particularly, this invention relates to a headlamp for vehicle which can increase visibility at the time of cornering.

### BACKGROUND OF THE INVENTION

Headlamps are disposed in both right and left sides of a body of a motor vehicle. Technology that provides movable reflectors in the headlamps has been disclosed, for example, in Japanese Patent Application Laid-Open ("JPA") No. 2000-294016. Each of the movable reflectors is rotated in a turning direction of the vehicle and a light distribution pattern of the headlamp is changed to the turning direction, thereby the headlamps illuminate a road-way sufficiently far in front of the vehicle that turns and increase visibility at the time of cornering.

The headlamp disclosed in JPA No. 2000-294016 has a structure such that a helical gear is arranged in a part (for example, a rotary axis) of this kind of movable reflector, a worm gear of a driving unit such as a stepping motor or the like is engaged with the helical gear, and the movable reflector is rotated in the turning direction by a driving force of the driving unit when the vehicle turns.

However, in the headlamp disclosed in JPA No. 2000-294016, the driving force of the driving unit is transmitted to the movable reflector based on a mechanical engagement between a part of the movable reflector and the driving unit so as to rotate the movable reflector in the turning direction. Therefore, if any trouble such as a break or the like occurs in the driving unit in a state where the movable reflector has been rotated, the movable reflector is prevented from returning to the original position due to resistance force produced in the mechanical engagement, and is kept in the locked state, so that the headlamps may cause oncoming motorists to be blinded after the vehicle turns.

### SUMMARY OF THE INVENTION

It is an object of the present invention is to provide a headlamp for a vehicle with a so-called fail-safe mechanism which returns a movable reflector to an original neutral position at the time of failure of a driving unit.

The headlamp for a vehicle according to this invention comprises a fixed reflector that is fixed and has an optical axis, and a light source mounted on the fixed reflector. This headlamp also comprises a movable reflector, which is freely rotatable at least in either one of leftward and rightward directions from a neutral position around a rotary axis which extends along an upward and downward direction, disposed in an upper side of the optical axis of said fixed reflector. The headlamp further comprises a driving unit engaged with a part of said movable reflector to rotate said movable reflector by a driving force of said driving unit. The driving unit is provided with a biasing unit which returns the movable reflector to the neutral position, and also with a moving unit which moves the driving unit in a direction in which the driving unit is disengaged from the movable reflector in the event of failure of the driving unit.

Further, since the driving unit moves in a direction in which the driving unit disengages from the the movable reflector through operation of the moving unit in the event of failure of the driving unit, the movable reflector is brought to a free rotation state and automatically returns to the neutral position by the biasing unit.

Other objects and features of this invention will become apparent from the following description with reference to the accompanying drawings.

### BRIEF DESCRIPTION OF THE DRAWINGS

Fig. 1 is a vertical cross-sectional view which shows a structure of the headlamp,
Fig. 2 is a front view which shows the structure of the headlamp shown in Fig. 1,
Fig. 3 is a horizontal cross-sectional view taken along the line SA-SA indicated by the arrows in Fig. 2,
Fig. 4 is a horizontal cross-sectional view corresponding to Fig. 3, which shows how the movable reflector of Fig. 3 is rotated,
Fig. 5 is a horizontal cross-sectional view corresponding to Fig. 3, which shows how the movable reflector of Fig. 4 is returned to the neutral position,
Fig. 6 is a plan view which shows a light distribution pattern at the time of cornering, and
Fig. 7 is a diagram which shows the light distribution pattern at the time of cornering in Fig. 6 when viewed from a driver's seat.

### DETAILED DESCRIPTIONS

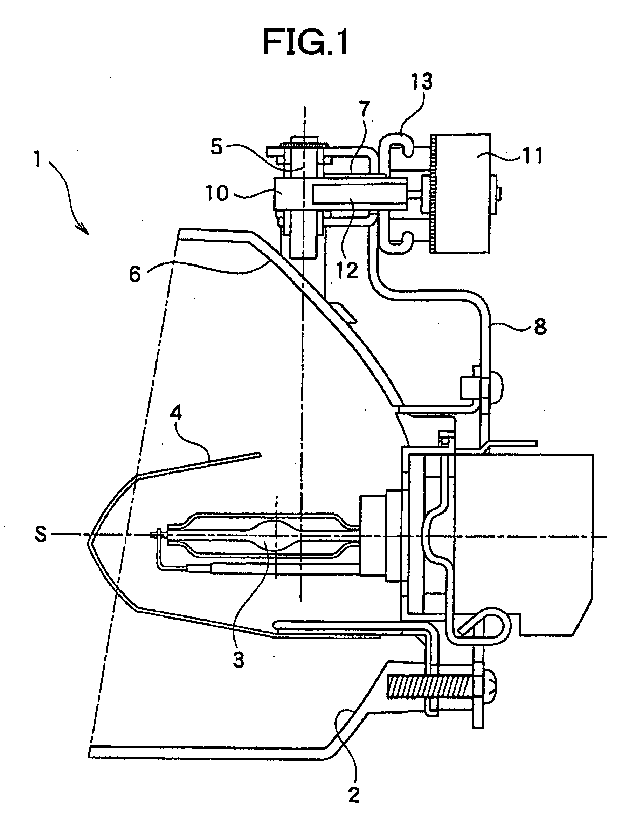

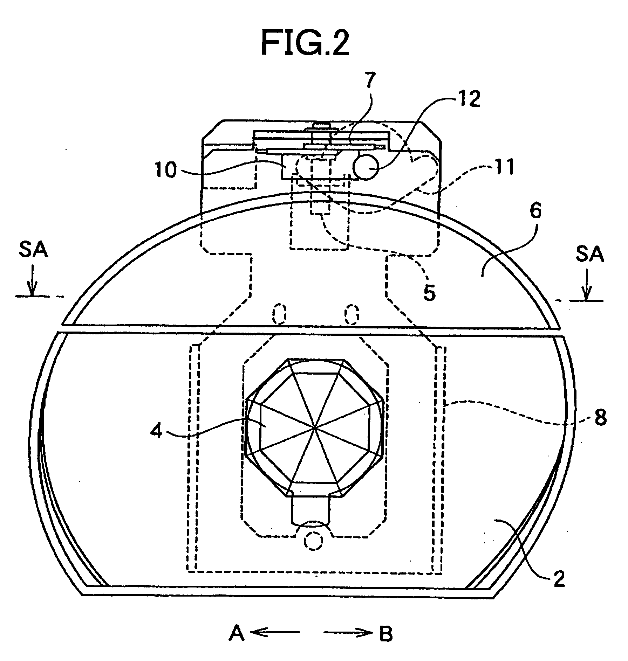

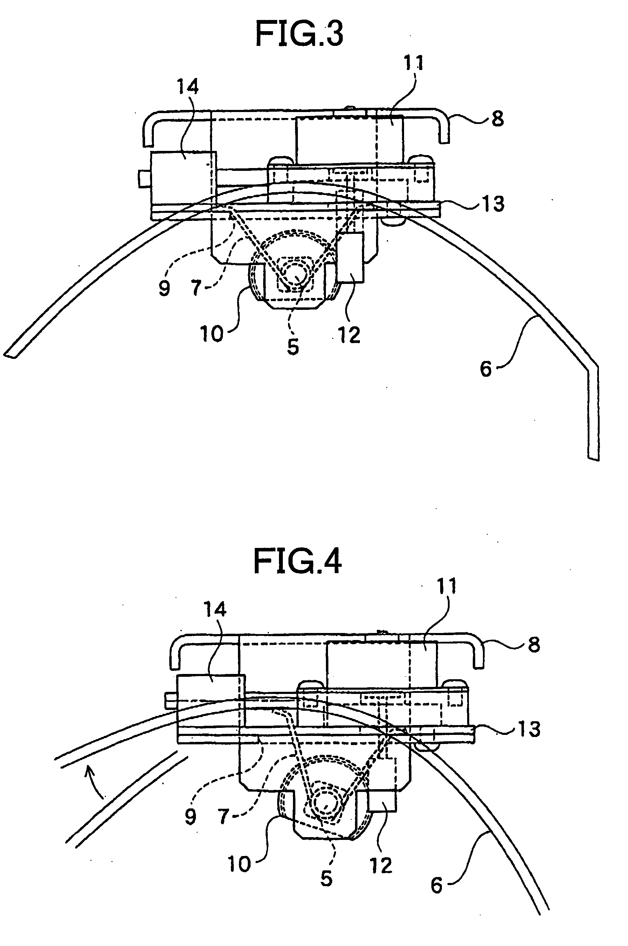

A headlamp 1 according to an embodiment of the present invention will be explained below with reference to Figs. 1 to 7. The headlamp 1 shown in Fig. 1 corresponds to one in a right-hand part of those provided in both right and left sides of the front section of a vehicle body. A direction of an arrow A in Fig. 2 corresponds to an outer side in a vehicle width direction and a direction of an arrow B corresponds to an inner side (a center side) in the vehicle width direction.

A fixed reflector 2 is provided in an interior of the headlamp 1, and a light source 3 is mounted to a center thereof. The sections except an upper section of the light source 3 are covered with a shade 4 in order to block a light traveling straight forward which forms a glare light. The upper side section from an optical axis S of the fixed reflector 2 is separated from the fixed reflector 2. This section functions as amovable reflector 6 freely rotatable rightward and leftward around a rotary axis 5 which extends along a vertical direction.

The rotary axis 5 of the movable reflector 6 is fixed with a substantially V-shaped spring 7 as an "biasing unit" in a non-rotatable state, and both free ends of the spring 7 are inwardly engaged with side ends of an opening 9 formed in a bracket 8 which axially supports the rotary axis 5 at the rear of the fixed reflector 2. The spring 7 does not elastically deform when the movable reflector 6 is located at the neutral position. The spring 7 can generate biasing force with which the movable reflector 6 is returned to the neutral position with a small and compact structure, and thereby this spring is preferable for a use in the headlamp 1 having a limited internal space.

Further, the helical gear 10 is disposed in the rotary axis 5 of the movable reflector 6 and a worm gear 12 of a stepping motor 11 as a "driving unit" is engaged with the helical gear 10 from an inner side B in the vehicle width direction. Accordingly, the driving force of the stepping motor 11 is transmitted to the helical gear 10 via the worm gear 12 to rotate the helical gear 10, thereby the movable reflector 6 rotates rightward and leftward from the neutral position that is in the same direction as that of the fixed reflector 2.

The stepping motor 11 is supported so as to freely move in a leftward and rightward direction along a guide 13 formed in an upper end of the bracket 8, and moves rightward and leftward by a solenoid 14 as a "moving unit" disposed in an outer side A in the vehicle width direction of the stepping motor 11. The solenoid 14 moves the stepping motor 11 to the outer side A in the vehicle width direction at a normal time, and maintains the state that the worm gear 12 is engaged with the helical gear 10.

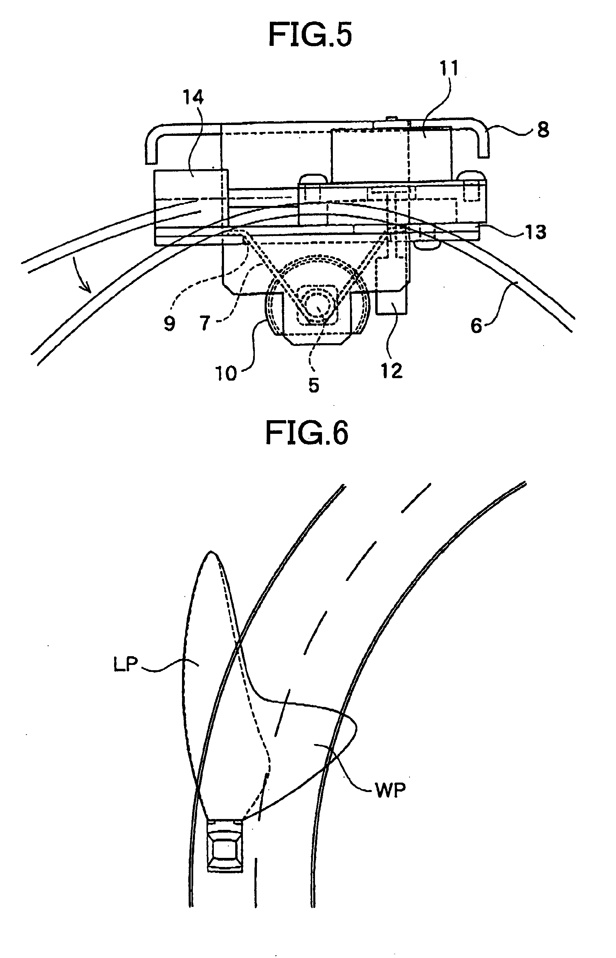

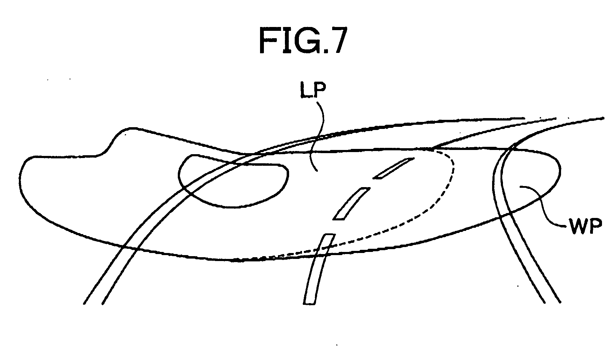

Accordingly, when the vehicle moves straight, the movable reflector 6 keeps the neutral position together with the fixed reflector 2, and shows a concentrated light distribution pattern LP such that the light of the light source 5 is mainly irradiated in the direction in which the vehicle moves straight as shown in Fig. 6 and Fig. 7. However, when the vehicle turns, only the movable reflector 6 is rotated to the direction to which the vehicle is turning by rotating the worm gear 12 engaged with the helical gear 10, and it is thereby possible to show a spread light distribution pattern WP with which the light is irradiated at a wide angle to the turning direction.

The movable reflector 6 can be rotated in correspondence to a steering angle in a steering direction executed by a steering handle (not shown). The movable reflector 6 can be also rotated only by a required angle immediately before operating the steering handle, by detecting a direction of steering the steering handle based on information such as environmental conditions of the vehicle, map information, a vehicle speed and the like . The movable reflector 6 is previously rotated in the turning direction of the vehicle to early change a light distribution pattern to the turning direction, thereby it is possible to further increase the visibility at the time of cornering.

Further, in the event of occurrence of the trouble such as a break of the stepping motor 11 or the like while the movable reflector 6 is in the rotated state, a sensor (not shown) detects the trouble, the solenoid 14 is operated to move the stepping motor 11 to the inner side B in the vehicle width direction, thereby the worm gear 12 is disengaged from the helical gear 10. When the movable reflector 6 is in the rotated state, the free end of the spring 7 on the side where the movable reflector 6 has been rotated is elastically deformed due to a contact with the side end of the opening 9. Therefore, the engagement between the worm gear 12 and the helical gear 10 is cancelled to make the movable reflector 6 back to a free rotation state, thereby the movable reflector 6 returns to the original neutral position due to the elastic restoring force of the spring 7. Accordingly, dazzling light is prevented from irradiation to other cars even if the movable reflector 6 does not turn back to the original state after the vehicle turns.

Since the worm gear 12 can be disengaged from the helical gear 10 only by being slightly moved apart from the helical gear 10, a compact solenoid with a small output is required as the solenoid 14 to be used. Thus, the worm gear is preferable for a use in the headlamp 1 with the limited internal space.

According to the present invention, the driving unit moves in the direction in which the driving unit disengages from the movable reflector through the operation of the moving unit in the event of failure of the driving unit. Therefore, the movable reflector becomes the free rotation state, and automatically returns to the neutral position by the biasing unit.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A headlamp for a vehicle comprising:
a fixed reflector that is fixed, said fixed reflector having an optical axis;
a light source mounted on said fixed reflector;
a movable reflector, which is freely rotatable at least in either one of leftward and rightward directions from a neutral position around a rotary axis which extends along an upward and downward direction, disposed in an upper side of the optical axis of said fixed reflector; and
a driving unit engaged with a part of said movable reflector to rotate said movable reflector by a driving force of said driving unit,
wherein said driving unit is provided with a biasing unit which returns said movable reflector to the neutral position, and with a moving unit which moves said driving unit in a direction in which said driving unit is disengaged from said movable reflector in the event of failure of said driving unit.

2. The headlamp according to claim 1, wherein said biasing unit is constituted by a spring fixed to the rotary axis in a non-rotatable state, and both free ends of said spring are engaged with side ends of an opening formed in a bracket which axially supports the rotary axis of said movable reflector, from an inner side of the opening, respectively.

3. The headlamp according to claim 1, wherein said movable reflector is provided with a helical gear disposed in its rotary axis, a worm gear of said driving unit supported so as to freely move in a leftward or rightward direction is engaged with said helical gear, and said driving unit is capable of moving in a direction in which said driving unit separates from said helical gear by a solenoid as said moving unit in the event of failure of said driving unit.

4. The headlamp according to claim 2, wherein said movable reflector is provided with a helical gear disposed in its rotary axis, a worm gear of said driving unit supported so as to freely move in a leftward or rightward direction is engaged with said helical gear, and said driving unit is capable of moving in a direction in which said driving unit separates from said helical gear by a solenoid as said moving unit in the event of failure of said driving unit.
